# EUROPEAN PATENT APPLICATION

(11) **EP 2 364 986 A1**
(43) Date of publication of application: **14.09.2011**
(21) Application number: 09832013.8
(22) Date of filing: 16.04.2009
(51) Int. Cl.: C07F 9/02

(54) **NOVEL PHOSPHATE COMPOUNDS, PREPARATION METHOD THEREOF, AND FLAME-RETARDANT THERMOPLASTIC RESIN COMPOSITIONS USING SAME**

(30) Priority: 09.12.2008 KR 20080124486
(71) Applicant: Cheil Industries Inc., Gyeongsangbuk-do 730-710 (KR)
(72) Inventor: LEE, Min Soo, Uiwang-si Gyeonggi-do 437-711 (KR); JOO, Beom Jun, Uiwang-si Gyeonggi-do 437-711 (KR)
(74) Representative: Bublak, Wolfgang
(86) International application number: PCT/KR2009/001975
(87) International publication number: WO 2010/067926

(57) **Abstract**

The present invention provides novel phosphoric compound, and method for preparing the same. A thermoplastic resin composition comprising the phosphoric compound of the present invention has excellent flame retardancy, and is eco-friendly because it does not generate toxic gas during molding or combusting.

## Description

### Field of the Invention

The present invention relates to a novel phosphoric compound, method for preparing the same, and flameproof thermoplastic resin composition using the same. More particularly, the present invention relates to a phosphoric compound having new structure, and flameproof thermoplastic resin composition using the phosphoric compound as a flame retardant in a blend comprising an aromatic vinyl polymer resin and a polyphenylene ether resin.

### Background of the Invention

A thermoplastic resin has been applied to almost all moldings because of excellent processability and mechanical properties. However, the thermoplastic resin has disadvantages in that the thermoplastic resin can be easily burned by ignition sources and can spread fire more broadly. Therefore, in order to apply the thermoplastic resin into housings of electronic heat-emitting products such as computers, facsimiles, and the like, the flame retardancy should be imparted in the thermoplastic resin.

Conventionally, a halogen-containing compound and an antimony-containing compound had been applied to the thermoplastic resin to impart flame retardancy. Examples of the halogen-containing compound include polybromodiphenyl ether, tetrabromobisphenol-A, epoxy compound substituted by bromine, chlorinated polyethylene, and the like. Examples of the antimony-containing compound include antimony trioxide and antimony pentoxide.

Although the method for improving the flame retardancy by applying the halogen-containing compound and the antimony-containing compound has advantages in that it is easy to ensure flame retardancy and also properties of the thermoplastic resin is hardly deteriorated, the method has disadvantages in that hydrogen halide gases generated during the molding process are fatally harmful to human body. Especially, polybromodiphenyl ether, mainly used for a halogen-containing flame retardant, tends to generate toxic gases such as bromide dioxin or bromide furan during combustion. Therefore, there is an increased need for improving flame retardancy of the thermoplastic without using halogen-containing compound.

A known and most widely used method of imparting flameproof without using halogen-containing flame retardants is to apply a phosphoric ester flame retardant. However, the resin compositions have a disadvantage in that it is necessary to add an exceeding amount of flame retardant or flame retardant supplement in order to obtain an acceptable level of flameproof.

Accordingly, in order to solve the problems of the conventional phosphoric flame retardant, the present inventors have developed a phosphoric compound having new structure and better flame retardancy than those, and a non-halogen containing flameproof thermoplastic resin composition having excellent flame retardancy by applying the phosphoric compound as flame retardant.

### Object of the Invention

An object of the present invention is to provide a novel phosphoric compound having excellent flameproof.

Another object of the present invention is to provide a novel phosphoric compound that does not generate the fatal hydrogen halide gases.

Another object of the present invention is to provide a phosphoric compound that has a better flame retardancy than conventional phosphoric flame retardant.

Another object of the present invention is to provide a thermoplastic resin composition having excellent flame retardancy by using the phosphoric compound.

Another object of the present invention is to provide an eco-friendly thermoplastic resin composition that does not generate the hydrogen halide gases during process or combustion of the resin composition.

Another object of the present invention is to provide a thermoplastic resin composition having excellent flame retardancy as well as moldability, by using the phosphoric compound and thereby reducing an amount of a polyphenylene ether resin.

Other objects and advantages of this invention will be apparent from the ensuing disclosure and appended claims.

### Summary of the Invention

An aspect of the present invention provides a phosphoric compound represented by the following Chemical Formula 1.

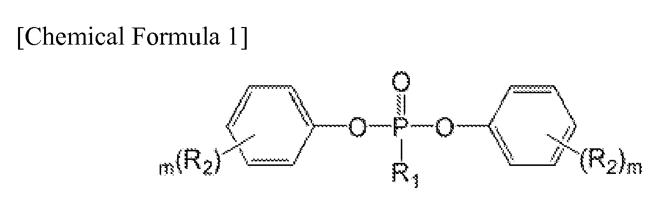

In the Chemical Formula 1, R₁ and R₂ are independently each other C₁-C₆ alkyl group or aryl group; and m is an integer of 1 to 3.

In exemplary embodiments of the present invention, R₁ may be a phenyl group and R₂ may be a C₁-C₆ alkyl group.

In another exemplary embodiments of the present invention, the phosphoric compound may be a bis(4-tert-butylphenyl) phenyl phosphonate or a bis(2,4,6-trimethylphenyl) phenyl phosphonate.

Another aspect of the present invention provides a method for preparing the phosphoric compound represented by the Chemical Formula 1. The method comprises reacting a compound represented by following Chemical Formula 4 with a compound represented by following Chemical Formula 5 under presence of an organic amine compound.

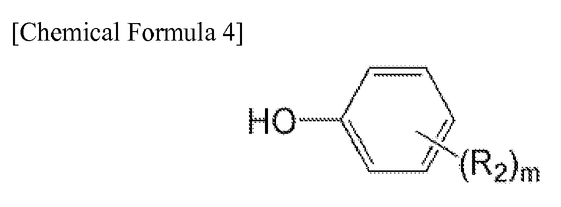

In the Chemical Formula 4, R₂ is C₁-C₆ alkyl group or aryl group; and m is an integer of 1 to 3.

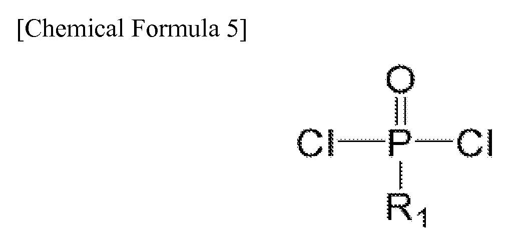

In the Chemical Formula 5, R₁ is C₁-C₆ alkyl group or aryl group.

In exemplary embodiments of the present invention, the organic amine compound may be a pyridine, a triethylamine, or mixtures thereof.

In exemplary embodiments of the present invention, a reaction molar ratio of the compound represented by the Chemical Formula 4 to the compound represented by the Chemical Formula 5 is about 2 to 3:1.

In exemplary embodiments of the present invention, a reaction molar ratio of the organic amine compound to the compound represented by the Chemical Formula 5 is about 2 to 50:1.

In another of exemplary embodiments of the present invention, the method comprises the following steps: reacting the compound represented by the Chemical Formula 4 with the compound represented by the Chemical Formula 5 under presence of an organic amine compound for about 10 to 30 hours at about 120 to 160 °C while stirring and refluxing the reaction mixture; removing an unreacted organic amine compound by depressurizing the reaction product obtained by the reaction; and filtering and drying the reaction product, in which the unreacted organic amine compound was removed, after washing the reaction product.

Another aspect of the present invention relates to a flame retardant that is comprised of the phosphoric compound represented by the Chemical Formula 1.

Another aspect of the present invention relates to a flameproof thermoplastic resin composition that is comprised of the phosphoric compound represented by the Chemical Formula 1 or mixtures thereof. In exemplary embodiments of the present invention, the composition comprises about 0.5 to 30 parts by weight of the phosphoric compound represented the above Chemical Formula 1 or mixtures thereof on the basis of 100 parts by weight of the thermoplastic resin.

In exemplary embodiments of the present invention, the phosphoric compound may be a bis(4-tert-butylphenyl) phenylphosphonate, a bis(2,4,6-trimethylphenyl) phenylphosphonate, or mixtures thereof.

The thermoplastic resin is especially not limited. In exemplary embodiments of the present invention, the thermoplastic resin may include aromatic vinyl polymer resin, polyphenylene ether resin, polyphenylene sulfide resin, polycarbonate resin, polyolefin-based resin, polyester, polyamide, and the like. The thermoplastic resin may be used alone or in combination thereof.

In exemplary embodiments of the present invention, the thermoplastic resin may include (A) about 80 to 95 % by weight of an aromatic vinyl polymer resin and (B) about 5 to 20 % by weight of a polyphenylene ether resin.

In another of exemplary embodiments of the present invention, the thermoplastic resin may further include flame retardant including (D1) an aromatic phosphoric acid ester compound, (D2) an alkyl phosphinic acid metal salt compound, or mixtures thereof. In exemplary embodiments of the present invention, the composition comprises about 1 to 25 parts by weight of (D1) the aromatic phosphoric acid ester compound, (D2) the alkyl phosphinic acid metal salt compound, or mixtures thereof on the basis of 100 parts by weight of the thermoplastic resin.

In exemplary embodiments of the present invention, the resin composition may further comprise additives such as plasticizer, heat stabilizer, oxidation inhibitor, anti-dripping agent, compatibilizer, light stabilizer, pigment, dye, inorganic filler, and the like.

In exemplary embodiments of the present invention, the first average combustion time of the resin composition measured in accordance with the UL 94 VB for specimens having a thickness of about 1/8" is less than 38 seconds.

### Brief Description of the Drawings

FIG. 1 shows a GC-MS chromatogram of phosphoric compound (C1) prepared in Example 1.
FIG. 2 shows a ¹H-NMR spectrum of phosphoric compound (C1) prepared in Example 1.
FIG. 3 shows a GC-MS chromatogram of phosphoric compound (C2) prepared in Example 2.
FIG. 4 shows a ¹H-NMR spectrum of phosphoric compound (C2) prepared in Example 2.

### Detailed Description of the Invention

### Phosphoric compound

A phosphoric compound of the present invention is represented by the following Chemical Formula 1.

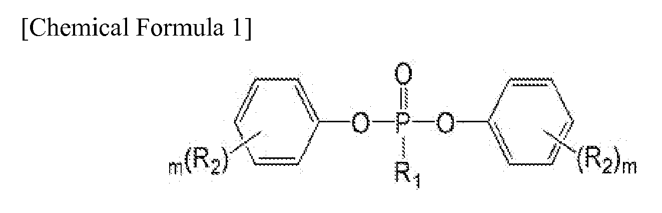

In the Chemical Formula 1, R₁ and R₂ are independently each other C₁-C₆ alkyl group or aryl group; and m is an integer of 1 to 3.

Specifically, C₁-C₆ alkyl group may be linear or branched. The aryl group is C₆-C₂₀ aryl group or C₁-C₆ alkyl group- substituted C₆-C₂₀ aryl group.

In exemplary embodiments of the present invention, R₁ may be phenyl group and the R₂ may be C₁-C₆ alkyl group. Preferably, R₂ is C₁-C₂ alkyl group and m is 2 or 3. More preferably, m is 3.

Preferably, R₁ is phenyl group, R₂ is branched C₃-C₆ alkyl group, and m is 1. More preferably, R₂ is tert-butyl group.

The exemplary embodiments of the phosphoric compound represented by the Chemical Formula 1 include bis(4-tert-butylphenyl) phenyl phosphonate represented by the following Chemical Formula 2 and bis(2,4,6-trimethylphenyl) phenyl phosphonate represented by the following Chemical Formula 3.

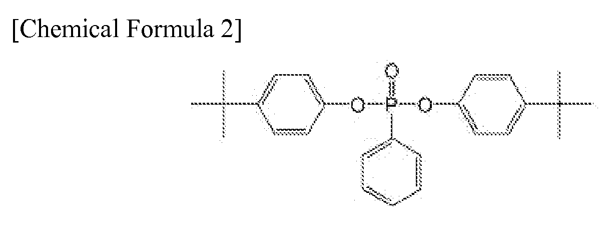

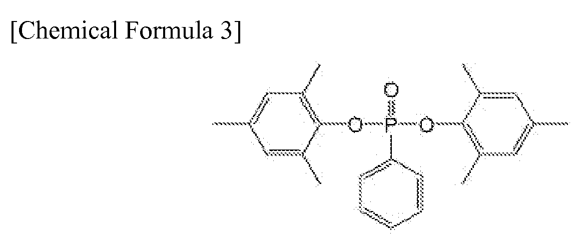

### Method for preparing the Phosphoric compound

A phosphoric compound of the present invention is prepared by reacting the compound represented by the Chemical Formula 4 with the compound represented by the Chemical Formula 5 under presence of an organic amine compound as shown in the following Reaction Equation 1. Specifically, the phosphoric compound of the Chemical Formula 1 is prepared by dehydrochlorination reaction of the compound represented by the Chemical Formula 4 and the compound represented by the Chemical Formula 5.

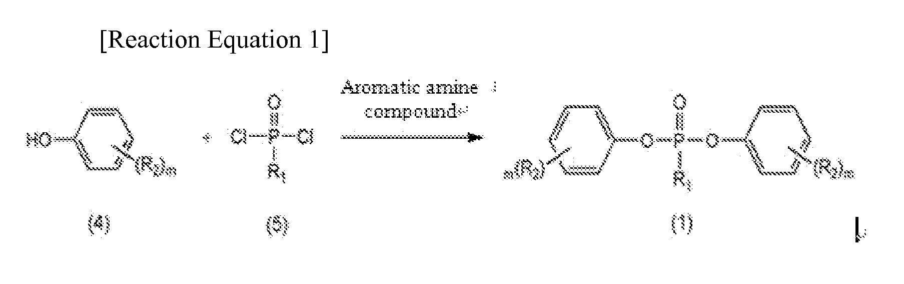

In the Reaction Equation 1, R₁ and R₂ are independently each other C₁-C₆ alkyl group or aryl group; and m is an integer of 1 to 3.

The exemplary embodiments of the compound represented by the Chemical Formula 4 may include, but are not limited to, 4-tert-butyl phenol, 2,4,6-trimethyl phenol. The exemplary embodiments of the compound represented by the Chemical Formula 5 may include, but is not limited to, phenylphosphonic dichloride.

The organic amine compound promotes the dehydrochlorination reaction, removes the HCl, which is a by-product of the dehydrochlorination reaction, and at the same time works like solvent. The exemplary embodiments of the organic amine compound may include, but are not limited to, pyridine, triethylamine or mixtures thereof. It is preferable to use the pyridine.

In exemplary embodiments of the present invention, a reaction molar ratio of the compound represented by the Chemical Formula 4 to the compound represented by the Chemical Formula 5 may be about 2:1 or more. In exemplary embodiments of the present invention, a reaction molar ratio of the compound represented by the Chemical Formula 4 to the compound represented by the Chemical Formula 5 may be about 2:1. However, because some of the compound represented by the Chemical Formula 4 may not participate in the reaction due to vaporization during reaction, it is preferable that the reaction molar ratio of the compound represented by the Chemical Formula 4 to the compound represented by the Chemical Formula 5 may be about 2:1 or more, preferably about 2 to 3:1 to prevent this problem.

The organic amine compound may be used in an excess amount on the basis of 1 mole of the compound represented by the Chemical Formula 5. Preferably, a reaction molar ratio of the organic amine compound to the compound represented by the Chemical Formula 5 may be about 2 to 50:1. More preferably, the reaction molar ratio of the organic amine compound to the compound represented by the Chemical Formula 5 may be about 2 to 10:1. When the organic amine compound is used in an amount of less than about 2 mole on the basis of the compound represented by the Chemical formula 5, the dehydrochlorination reaction does not proceed smoothly and it is hard to remove the HCl of by-product. Although the maximum value of the reaction molar ratio of the organic amine compound to the compound represented by the Chemical Formula 5 is not particularly limited, it is preferable not to exceed 50 molar ratio for saving the manufacturing costs and the collecting cost of unreacted organic amine compound.

In exemplary embodiments of the present invention, the method comprises: reacting the compound represented by the Chemical Formula 4 with the compound represented by the Chemical Formula 5 at about 120 to 160°C for about 10 to 30 hours, preferably about 20 to 27 hours, while stirring and refluxing the reaction mixture.

In exemplary embodiments of the present invention, the compound represented by the Chemical Formula 4 is reacted with the compound represented by the Chemical Formula 5 while stirring and refluxing the reaction mixture, and then the phosphoric compound represented by the Chemical Formula 1 is formed by the dehydrochlorination reaction as mentioned above. And the HCl, which is a by-product of the dehydrochlorination reaction, bonds with the organic amine compound and thereby forms an organic amine hydrochloride.

In another of exemplary embodiments of the present invention, the method may further comprising removing the unreacted organic amine compound and the organic amine hydrochloride from reaction product obtained by the dehydrochlorination reaction.

First, the unreacted organic amine compound is removed by depressurizing the reaction product including the phosphoric compound represented by Chemical Formula 1, the organic amine hydrochloride and the unreacted organic amine compound. In this case, it is preferable that the depressurizing is carried out by a rotary distillation apparatus at room temperature.

After the unreacted organic amine compound is removed by the depressurizing process, the reaction product is washed filtered and dried. Specifically, the water is added into the reaction product, in which the unreacted organic amine compound is removed, the resulting solution is stirred for about 0.5 to 2 hours and filtered, the organic amine hydrochloride present in the reaction product is dissolved in water and removed, and the phosphoric compound represented by the Chemical Formula 1, which is insoluble in water and in the form of solid, is obtained. And the water present in the phosphoric compound represented by the Chemical Formula 1 is completely removed by using the depressurizing oven, and the like.

### Flameproof thermoplastic resin composition

The present invention provides a flameproof thermoplastic resin composition using the phosphoric compound represented by the Chemical Formula 1. The resin composition comprises the thermoplastic resin and the phosphoric compound represented by the Chemical Formula 1 or mixtures thereof.

In exemplary embodiments of the present invention, the flameproof thermoplastic resin composition comprises about 100 parts by weight of the thermoplastic resin, and about 0.5 to 30 parts by weight, preferably about 2 to 25 parts by weight, more preferably about 2.5 to 20 parts by weight of the phosphoric compound represented by the Chemical Formula 1 or mixtures thereof. When an amount of the phosphoric compound represented by the Chemical Formula 1 or mixtures thereof is less than about 0.5 parts by weight, the resin composition does not obtain a sufficient flame retardancy. On the other hand, when the amount of the phosphoric compound represented by the Chemical Formula 1 or mixtures thereof is more than about 30 parts by weight, fundamental properties of the resin composition may be deteriorated.

Examples of the thermoplastic resin used in the present invention are especially not limited. For example, aromatic vinyl polymer resin, polyphenylene ether resin, polyphenylene sulfide resin, polyalkyl(meth)acrylate resin, polycarbonate resin, polyolefin-based resin, polyester, polyamide, and the like may be used. In exemplary embodiments, aromatic vinyl polymer resin including polystyrene resin (PS), rubber modified polystyrene resin (HIPS), aromatic vinyl-vinyl cyanide graft copolymer resin (ABS), vinyl cyanide-aromatic vinyl copolymer resin (SAN); polyphenylene ether resin, polyphenylene sulfide resin, polycarbonate resin, polyethylene resin, polypropylene resin, polyethylene terephthalate, polybutylene terephthalate, polymethylmethacrylate, polyamide resin, and the like may be used. The thermoplastic resin may be used alone or in combination thereof.

In exemplary embodiments of the present invention, the resin composition comprises a mixture comprising (A) an aromatic vinyl polymer resin and (B) a polyphenylene ether resin as the thermoplastic resin. More specifically, the resin composition comprises 100 parts by weight of a mixture comprising (A) about 80 to 95 % by weight of the aromatic vinyl polymer resin and (B) about 5 to 20 % by weight of the polyphenylene ether resin, and about 0.5 to 30 parts by weight of the phosphoric compound represented by the Chemical Formula 1 or mixtures thereof.

### (A) Aromatic vinyl polymer resin.

In exemplary embodiments of the present invention, the aromatic vinyl polymer resin (A) may be a homopolymer of aromatic vinyl monomers or a polymer of rubber and aromatic vinyl monomer. Also, the aromatic vinyl polymer resin (A) can further comprise alkyl ester monomer, unsaturated nitrile monomer, or mixtures thereof.

In exemplary embodiments of the present invention, the aromatic vinyl polymer resin is polystyrene resin (PS), rubber modified polystyrene resin (HIPS), aromatic vinyl-vinyl cyanide graft copolymer resin (ABS), vinyl cyanide-aromatic vinyl copolymer resin (SAN), and the like, preferably rubber modified polystyrene resin (HIPS).

The rubber is selected from the group consisting of butadiene-based rubber, isoprene based rubber, copolymer of butadiene and styrene, alkyl(meth)acrylate rubber , and mixtures thereof. And about 3 to 30 % by weight of the rubber is used on the basis of gross weight of the aromatic vinyl polymer resin (A), preferably about 5 to 15 % by weight.

The aromatic vinyl monomer is used in an amount of about 70 to 97 % by weight, preferably about 85 to 95 % by weight, on the basis of total weight of the aromatic vinyl polymer resin (A). The aromatic vinyl polymer resin (A) may also contain other monomer such as acrylonitrile, acrylic acid, methacrylic acid, maleic acid anhydride, N-substituted maleimide, and the like, in order to impart properties such as chemical resistance, processability, flameproof, and the like. An amount of the other monomers is preferably about 40 % by weight or less on the basis of total weight of the aromatic vinyl polymer resin (A).

The aromatic vinyl polymer resin (A) is manufactured by polymerization under the presence of a polymerization initiator or by thermal polymerization without a polymerization initiator. The polymerization initiator is one or more of a peroxide-based initiator comprising benzoyl peroxide, t-butyl hydro peroxide, acetyl peroxide, cumenhydro peroxide, and the like; and an azo-based initiator comprising azobisisobutyronitrile, and the like; but is not limited to.

The aromatic vinyl polymer resin (A) is manufactured by using the bulk polymerization, suspension polymerization, emulsion polymerization, or mixture method thereof, preferably bulk polymerization.

In the blend comprising the aromatic vinyl polymer resin (A) and the polyphenylene ether resin (B), the size of the rubber phase particle is preferable about 0.1 to 2.0 µm for the best properties.

The aromatic vinyl polymer resin (A) is used in an amount of about 80 to 95 % by weight, preferably about 80 to 90 % by weight on the basis of total weight of (A) + (B).

### (B) Polyphenylene ether resin

In exemplary embodiments of the present invention, a polyphenylene ether resin (B) is added in the aromatic vinyl polymer resin (A) for more improving the flame retardancy and heat resistance of the thermoplastic resin composition.

Examples of the polyphenylene ether resin (B) comprise poly(2,6-dimethyl-1,4-phenylene)ether, poly(2,6-diethyl-1,4-phenylene)ether, poly(2,6-dipropyl-1,4-phenylene)ether, poly(2-methyl-6-ethyl-1,4-phenylene)ether, poly(2-methyl-6-propyl-1,4-phenylene)ether, poly(2-ethyl-6-propyl-1,4-phenylene)ether, poly(2,6-diphenyl-1,4-phenylene)ether, copolymer of poly(2,6-dimethyl-1,4-phenylene)ether and poly(2,3,6-trimethyl-1,4-phenylene)ether, copolymer of poly(2,6-dimethyl-1,4-phenylene)ether and poly(2,3,5-triethyl-1,4-phenylene)ether, and the like, but are not limited to. The polyphenylene ether resin may be used alone or in combination thereof. Preferably, copolymer of poly(2,6-dimethyl-1,4-phenylene)ether and poly(2,3,6-trimethyl-1,4-phenylene)ether, or poly(2,6-dimethyl-1,4-phenylene)ether is used, and most preferably poly(2,6-dimethyl-1,4-phenylene)ether is used.

The degree of polymerization of the polyphenylene ether resin (B) is especially not limited. However, the degree of polymerization of the polyphenylene ether resin that is measured in chloroform solvent at 25°C is preferably about 0.2 to 0.8 in view of heat stability and workability of the thermoplastic resin composition according to the exemplary embodiments of the present invention.

The polyphenylene ether resin (B) is used in amount of about 5 to 20 % by weight, preferably about 10 to 20 % by weight on the basis of total weight of (A) + (B). When an amount of the polyphenylene ether resin (B) is less than about 5 % by weight, flamer retardancy of the resin compositionmay be deteriorated. On the other hand, when an amount of the polyphenylene ether resin (B) is more than about 20 % by weight, moldability of that may be deteriorated.

In another exemplary embodiments of the present invention, the thermoplastic resin composition may further include aromatic phosphoric acid ester compound (D1), alkyl phosphinic acid metal salt compound (D2), or mixtures thereof, in order to improve flame retardancy.

The aromatic phosphoric acid ester compound (D1), alkyl phosphinic acid metal salt compound (D2), or mixtures thereof is used in amount of about 1 to 25 parts by weight, preferably about 5 to 20 parts by weight, more preferably about 10 to 15 parts by weight on the basis of 100 parts by weight of the thermoplastic resin.

When an amount of the aromatic phosphoric acid ester compound (D1), alkyl phosphinic acid metal salt compound (D2), or mixtures thereof is less than about 1 part by weight, the resin composition does not obtain sufficient flame retardancy. On the other hand, when an amount of the aromatic phosphoric acid ester mixture (D1), alkyl phosphinic acid metal salt compound (D2), or mixtures thereof is more than about 25 parts by weight, properties such as impact strength may be deteriorated.

### (D1) Aromatic phosphoric acid ester compound

The aromatic phosphoric acid ester compound (D1) that is used in the thermoplastic resin composition according to another exemplary embodiment of the present invention has a structure of the following Chemical Formula 6.

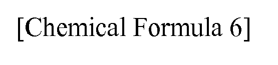

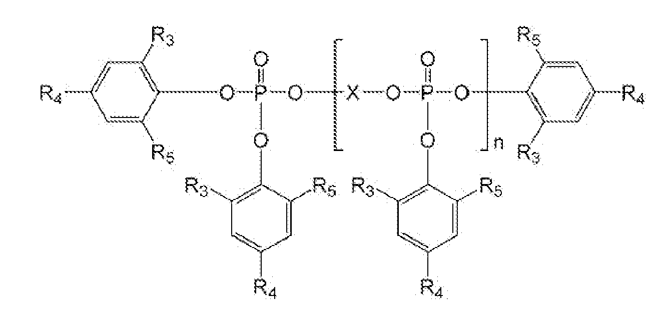

In the Chemical Formula 6, R₃, R₄, and R₅ are independently each other hydrogen or C₁-C₄ alkyl group; X is C₆-C₂₀ aryl group or C₁-C₄ alkyl-substituted C₆-C₂₀ aryl group and is derived from dialcohol of resorcinol, hydroquinol, or bisphenol- A; and n is an integer of 0 to 4.

Examples of the aromatic phosphoric acid ester compound (D1) are as follows. When n is 0 in the Chemical Formula 6, the compound represented by the Chemical Formula 6 includes triphenyl phosphate, tri(2,6-dimethyl) phosphate, and the like, but is not limited to. When n is 1 in the Chemical Formula 6, the compound represented by the Chemiclal Formula 6 includes resorcinol bis(diphenyl) phosphate, resorcinol bis(2,6-dimethylphenyl) phosphate, resorcinol bis(2,4-ditertiarybutylphenyl) phosphate, hydroquinol bis (2,6-dimethylphenyl) phosphate, hydroquinol bis(2,4-ditertiarybutylphenyl) phosphate, and the like, but is not limited to. The aromatic phosphoric acid ester compound can be used alone or in combination thereof.

### (D2) Alkyl phosphinic acid metal salt compound

The alkyl phosphinic acid metal salt compound (D2) that is used in the thermoplastic resin composition according to another exemplary embodiment of the present invention has a structure of the following Chemical Formula 7.

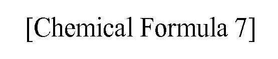

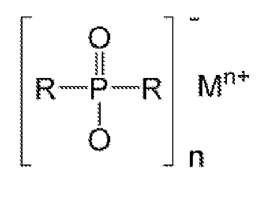

In the Chemical Formula 7, R is C₁-C₆ alkyl group, C₄-C₆ cycloalkyl group, or C₆-C₁₀ aryl group; M is metal of Al, Zn, Mg or Ca; and n is an integer of 2 or 3.

In exemplary embodiments, R is methyl group, ethyl group, propyl group, butyl group or phenyl group, and M is Al or Zn.

Examples of the alkyl phosphinic acid metal salt compound (D2) may include diethyl phosphinic acid aluminum metal salt, but are not limited to.

The average diameter of the alkyl phosphinic acid metal salt compound (D2) is preferably about 10 µm or less, more preferably about 0.01 to 10 µm. When the average diameter of the alkyl phosphinic acid metal salt compound (D2) is more than about 10 µm, the impact strength and flame retardancy of the resin composition may be deteriorated. On the other hand, when the average diameter of the alkyl phosphinic acid metal salt compound (D2) is less than about 0.01 µm, there may be a problem in preparing the product, and the extrusion or injection processability of the resin composition may be deteriorated.

In other exemplary embodiments of the present invention, the thermoplastic resin composition may further include additives depending on its use. Examples of the additives may include plasticizers, heat stabilizers, antioxidants, anti-dripping agents, compatibilizers, light-stabilizers, pigments, dyes, inorganic fillers, and the like, but are not limited to. Examples of the inorganic fillers may include asbestos, glass fibers, talc, ceramic, sulfates, and the like. The additives can be used alone or in combination thereof. The additives can be added in an amount of about 30 parts by weight or less, preferably about 0.001 to 30 parts by weight on the basis of 100 parts by weight of the thermoplastic resin.

The thermoplastic resin composition according to the present invention can be manufactured by conventional methods. In exemplary embodiments, after the above-stated components are mixed with additives, the thermoplastic resin composition can be manufactured in the form of pellet by melt extruding in the extruding machine.

The flameproof thermoplastic resin composition according to the present invention can be applied to various products due to its excellent flame retardancy. Especially, the flameproof thermoplastic resin composition can be widely used to exterior materials of electric/electronic goods such as housings of televisions, computers, audios, air conditioners, office automation equipments, and the like, to which strict flameproof regulations are required.

The method for preparing the plastic products from the flameproof thermoplastic resin composition according to the present invention is especially not limited. For example, extrusion molding, injection molding, blow molding, casting molding, and the like can be applied. And these methods are easily carried out by a person with ordinary skill in the art.

The invention may be better understood by reference to the following examples which are intended for the purpose of illustration and are not to be construed as in any way limiting the scope of the present invention, which is defined in the claims appended hereto.

### Examples

### Example 1: Preparation of a phosphoric compound (C1)

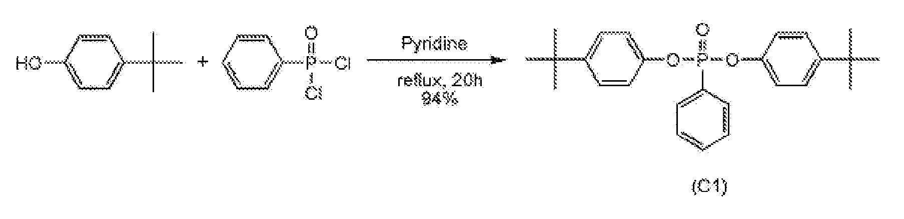

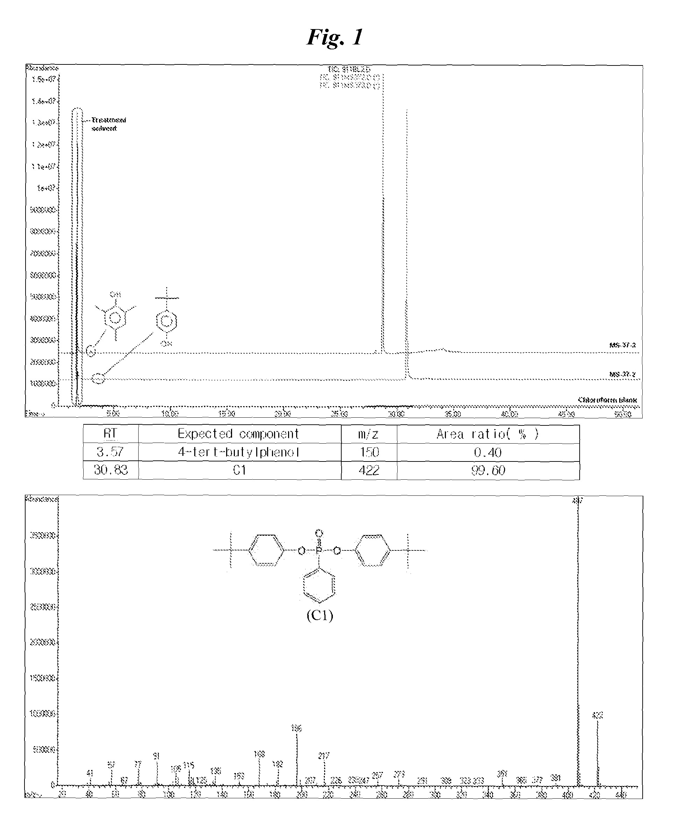

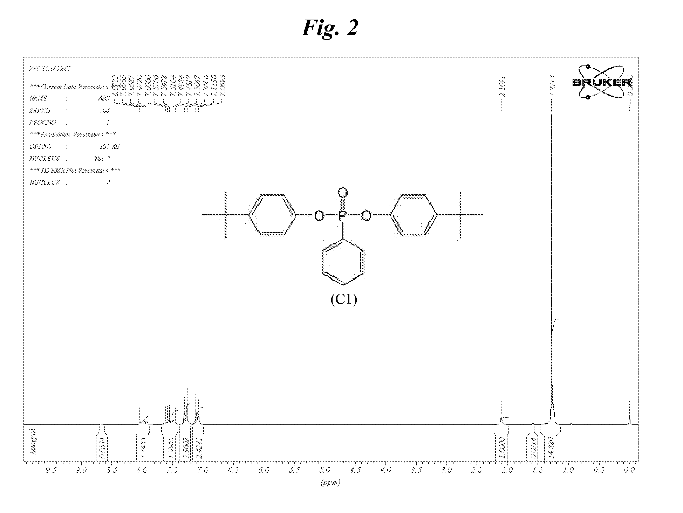

4-tert-butyl phenol (60 g, 0.40 mol), phenyl phosphonic dichloride (43 g, 0.20 mol), and pyridine (400 mL, 4.97 mol) were added into a reactor, refluxed and stirred at 140 °C for about 20 hours. The temperature of the reactor was cooled down to room temperature and then the unreacted pyridine was removed by depressurizing the reaction product using a rotary distillation apparatus. 500 mL of distilled water was added into the reaction product, which is in the form of solid by removing the unreacted pyridine, the resulting solution was stirred for 1 hour to dissolve pyridine hydrochloride produced during the reaction in the water layer, and the resulting solution was filtered to obtain a water-insoluble solid compound (C1). The filtered solid compound (C1) was dried for 24 hours in an oven under reduced pressure to obtain a pure white solid of bis(4-tert-butylphenyl)phenyl phosphonate (C1) (79 g, yield: 96%). The resultant compound (C1) was analyzed by GC-MS and ¹H-NMR, and the results are shown in Figs. 1 and 2, respectively.

### Example 2: Preparation of a phosphoric compound (C2)

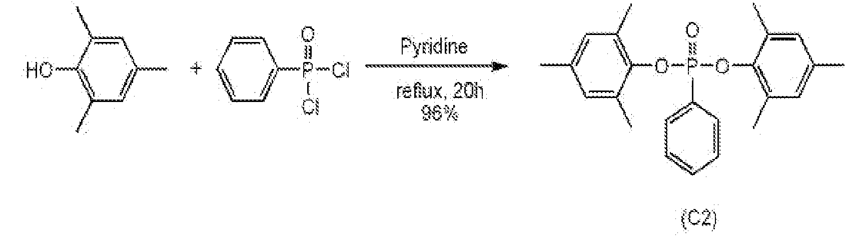

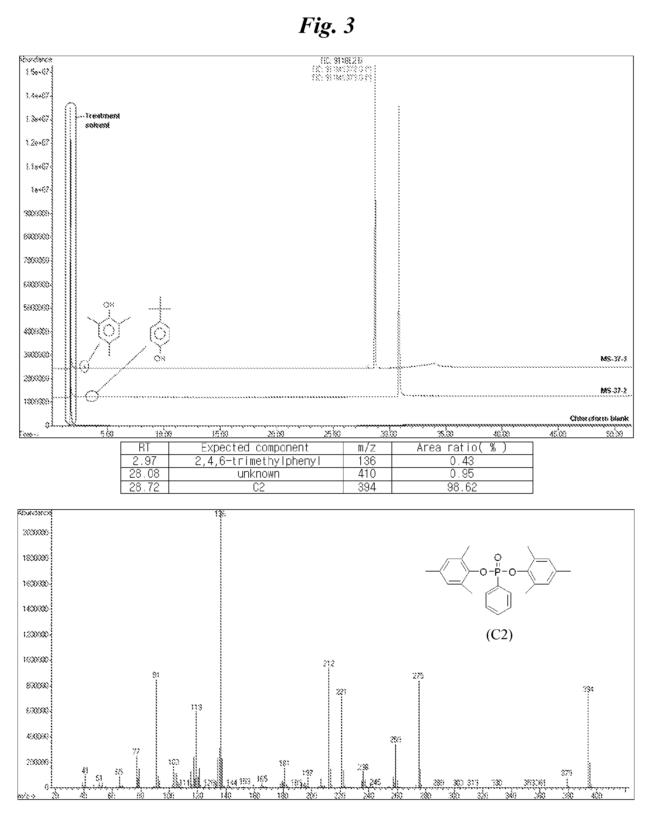

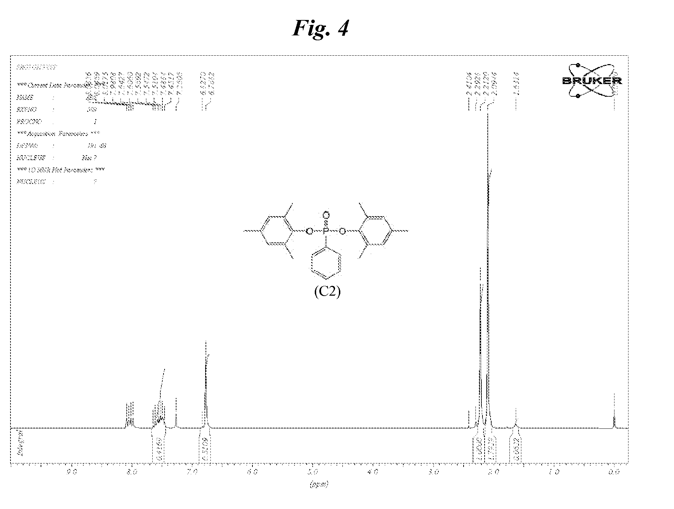

2,4,6-trimethyl phenol (54 g, 0.40 mol), phenyl phosphonic dichloride (43 g, 0.20 mol), and pyridine (400 mL, 4.97 mol) were added into a reactor, refluxed, and stirred at 140 °C for about 20 hours. The temperature of the reactor was cooled down to room temperature and then the unreacted pyridine was removed by depressurizing the reaction product using a rotary distillation apparatus. 500 mL of distilled water was added into the reaction product, which is in the form of solid by removing the unreacted pyridine, the resulting solution was stirred for 1 hour to dissolve pyridine hydrochloride produced during the reaction in the water layer, and the resulting solution was filtered to obtain a water-insoluble solid compound (C2). The filtered solid compound (C2) was dried for 24 hours in an oven under reduced pressure to obtain a pure white solid of bis(2,4,6-trimethylphenyl)phenyl phosphonate (C2) (75.7 g, yield: 96%). The resultant compound (C2) was analyzed by GC-MS and ¹H-NMR, and the results are shown in Figs. 3 and 4, respectively.

### Preparation of flameproof thermoplastic resin composition

Specifications of each components used in the following examples and comparative examples are as follows.

### (A) Aromatic vinyl polymer resin

Rubber modified styrene resin made by Cheil Industries Inc. of Korea (product name: HG-1760S) was used.

### (B) Polyphenylene ether resin

Poly(2,6-dimethyl-1,4-phenylene)ether made by Mitsubishi Engineering Plastic company of Japan (product name: PX-100F) was used.

### (C) Phosphoric compound

(C1) Bis(4-tert-butylphenyl)phenyl phosphonate prepared in the example 1 was used.

(C2) Bis(2,4,6-trimethylphenyl)phenyl phosphonate prepared in the example 2 was used.

### (D1) Aromatic phosphoric acid ester compound

Bis(dimethylphenyl) phosphate bisphenol A made by Daihachi Chemical Industry Co., Ltd. of Japan (product name: CR741 S) was used.

### (D2) Alkyl phosphinic acid metal salt compound

Diethyl Phosphinic acid aluminum metal salt made by Clariant company (product name: Exolit OP930) was used. The average diameter is 5 µ m.

### Examples 3 to 8

The each components were added into a conventional mixer in an amount as described in the following Table 1, and the mixture was extruded through a conventional twin screw extruder at a temperature range of 200 to 280°C to prepare a product in pellet form. The pellets were dried at 80°C for 2 hours and then molded into test specimens in a 6Oz injection molding machine at 180 to 280°C with a mold temperature of 40 to 80°C.

The flame retardancy was measured in accordance with the UL 94 VB for the specimens having a thickness of about 1/8". The results of examples 3 to 8 are shown in Table 1.

### Comparative Examples 1 to 2

Comparative examples 1 to 2 were conducted in the same manner as in the Examples except each component was used in a different amount. The results of comparative examples 1 to 2 are shown in Table 1.

**Table 1**

| | | Examples | | | | | | Comparative Examples | |
|---|---|---|---|---|---|---|---|---|---|
| | | 3 | 4 | 5 | 6 | 7 | 8 | 1 | 2 |
| (A) | | 85 | 85 | 85 | 85 | 85 | 85 | 85 | 85 |
| (B) | | 15 | 15 | 15 | 15 | 15 | 15 | 15 | 15 |
| (C) | (C1) | 20 | - | 5 | - | 25 | - | - | - |
| | C2) | - | 20 | - | 5 | - | 25 | - | - |
| (D) | (D1) | - | - | 15 | 15 | 10 | 10 | 20 | 15 |
| | (D2) | - | - | - | - | 25 | 25 | - | 5 |
| First average combustion time (1/8", sec) | | 37.5 | 23.0 | 27.7 | 20.9 | 15.2 | 8.5 | 41.3 | 41.5 |
| Second average combustion time (1/8", sec) | | 27.0 | 24.7 | 5.7 | 23.8 | 19.8 | 15.1 | 31.5 | 10.2 |

As shown in Table 1, it can be seen that Examples 3 to 4 using only flameproof phosphoric compound and Examples 5 to 8 using flameproof phosphoric compound as well as conventional phosphoric flame retardant exhibit excellent flameproof, compared to Comparative Examples 1 to 2 using only conventional phosphoric flame retardant.

Many modifications and changes of the present invention may be easily carried out by a person with ordinary skill in the art and may be deemed to be with the scope of the present invention as defined in the following claims.

## Claims

1. A phosphoric compound represented by the following Chemical Formula 1: 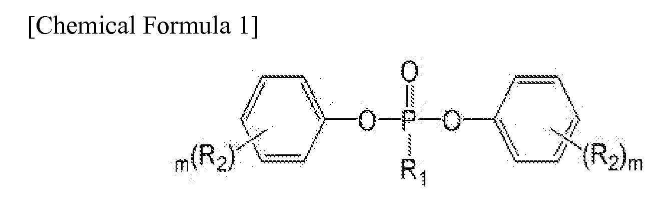 wherein R₁ and R₂ are independently each other C₁-C₆ alkyl or aryl group; and m is an integer of 1 to 3.

2. The phosphoric compound of claim 1, wherein R₁ is phenyl group and R₂ is C₁-C₆ alkyl group.

3. The phosphoric compound of claim 1, wherein the phosphoric compound is a bis(4-tert-butylphenyl) phenyl phosphonate represented by the following Chemical Formula 2 or a bis(2,4,6-trimethylphenyl) phenyl phosphonate represented by the following Chemical Formula 3.

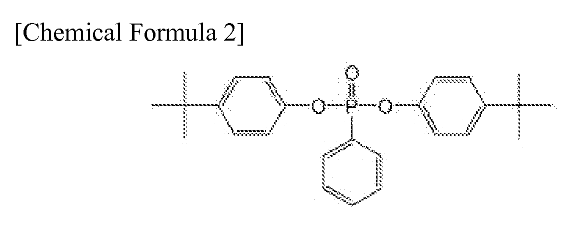

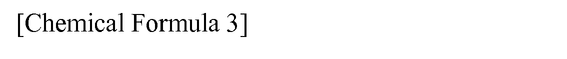

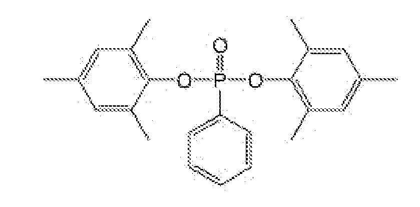

4. A method for preparing a phosphoric compound represented by the following Chemical Formula 1 comprising reacting a compound represented by the following Chemical Formula 4 with a compound represented by the following Chemical Formula 5 under presence of an organic amine compound: 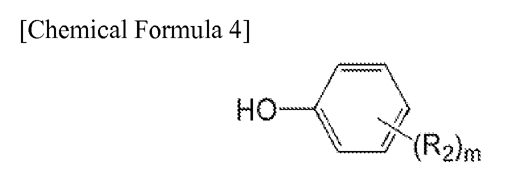 wherein R₂ is C₁-C₆ alkyl group or aryl group; and m is an integer of 1 to 3, 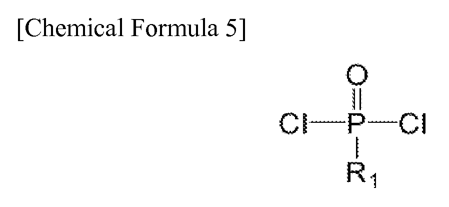 wherein R₁ is C₁-C₆ alkyl group or aryl group, 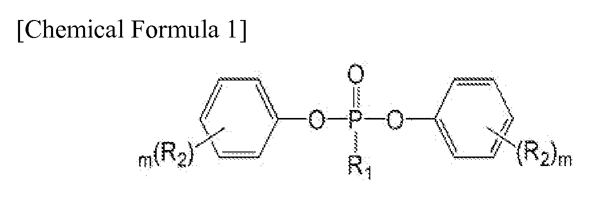 wherein R₁ and R₂ are independently each other C₁-C₆ alkyl group or aryl group; and m is an integer of 1 to 3.

5. The method of Claim 4, wherein said organic amine compound is pyridine, triethylamine, or a mixture thereof.

6. The method of Claim 4, a reaction molar ratio of the compound represented by the Chemical Formula 4 to the compound represented by the Chemical Formula 5 is about 2 to 3 : 1.

7. The method of Claim 4, wherein a reaction molar ratio of the organic amine compound to the compound represented by the Chemical Formula 5 is about 2 to 50:1.

8. The method of Claim 4, comprising:
reacting the compound represented by the Chemical Formula 4 with the compound represented by the Chemical Formula 5 under presence of an organic amine compound for about 10 to 30 hours at about 120 to 160 °C while stirring and refluxing the reaction mixture;
removing an unreacted organic amine compound by depressurizing the reaction product obtained by the reaction; and
filtering and drying the reaction product, in which the unreacted organic amine compound was removed, after washing the reaction product.

9. A flame retardant represented by the following Chemical Formula 1: 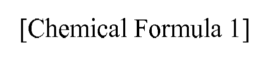 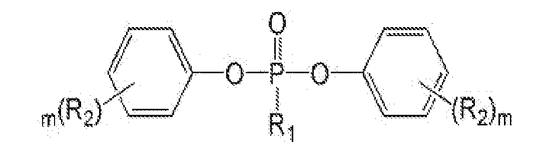 wherein R₁ and R₂ are independently each other C₁-C₆ alkyl group or aryl group; and m is an integer of 1 to 3.

10. A flameproof thermoplastic resin composition comprising:
100 parts by weight of a thermoplastic resin; and
about 0.5 to 30 parts by weight of a phosphoric compound represented by the following Chemical Formula 1 or mixtures thereof: 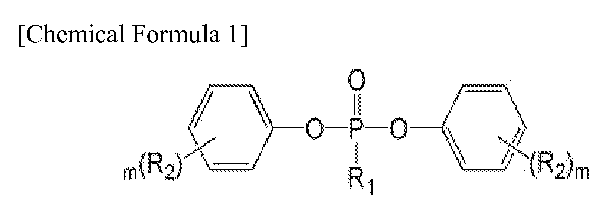 wherein R₁ and R₂ are independently each other C₁-C₆ alkyl group or aryl group; and m is an integer of 1 to 3.

11. The flameproof thermoplastic resin composition of Claim 10, wherein the phosphoric compound is a bis(4-tert-butylphenyl) phenyl phosphonate represented by the following Chemical Formula 2 or a bis(2,4,6-trimethylphenyl) phenyl phosphonate represented by the following Chemical Formula 3.

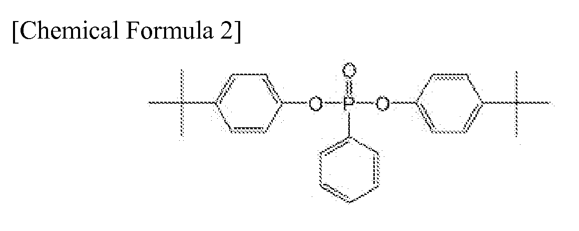

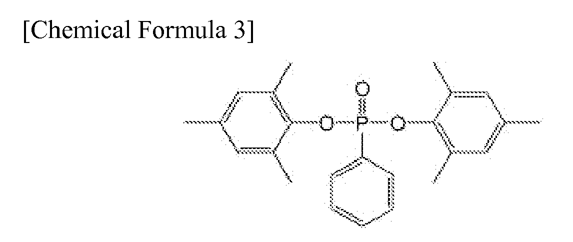

12. The flameproof thermoplastic resin composition of Claim 10, wherein the thermoplastic resin is selected from the group consisting of aromatic vinyl polymer resin including polystyrene resin(PS), rubber modified polystyrene resin(HIPS), aromatic vinyl-vinyl cyanide graft copolymer resin(ABS), vinyl cyanide-aromatic vinyl copolymer resin(SAN); polyphenylene ether resin, polyphenylene sulfide resin, polycarbonate resin, polyethylene resin, polypropylene resin, polyethylene terephthalate, polybutylene terephthalate, polymethylmethacrylate, polyamide resin, and mixture thereof.

13. The flameproof thermoplastic resin composition of Claim 10, wherein the thermoplastic resin comprises (A) about 80 to 95 % by weight of an aromatic vinyl polymer resin and (B) about 5 to 20 % by weight of a polyphenylene ether resin.

14. The flameproof thermoplastic resin composition of Claim 10, further comprising about 1 to 25 parts by weight of (D1) aromatic phosphoric acid ester compound, (D2) alkyl phosphinic acid metal salt compound, or mixtures thereof on the basis of 100 parts by weight of the thermoplastic resin.

15. The flameproof thermoplastic resin composition of Claim 14, wherein the aromatic phosphoric acid ester compound (D1) has a structure of the following Chemical Formula 6: 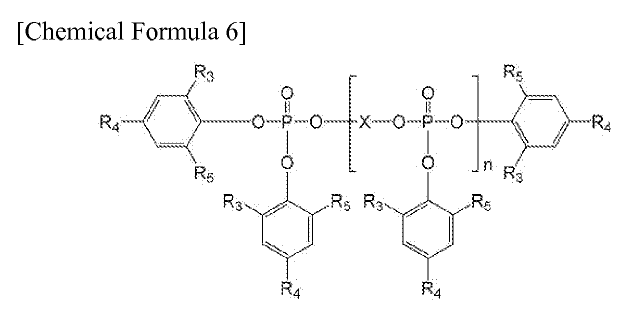 wherein R₃, R₄, and R₅ are independently each other hydrogen or C₁-C₄ alkyl group; X is C₆-C₂₀ aryl group or C₁-C₄ alkyl-substituted C₆-C₂₀ aryl group and is derived from dialcohol of resorcinol, hydroquinol, or bisphenol- A; and n is an integer of about 0 to 4.

16. The flameproof thermoplastic resin composition of Claim 14, wherein an average diameter of the alkyl phosphinic acid metal salt compound (D2) is about 10 µm or less.

17. The flameproof thermoplastic resin composition of Claim 14, wherein the alkyl phosphinic acid metal salt compound (D2) has a structure of the following Chemical Formula 7: 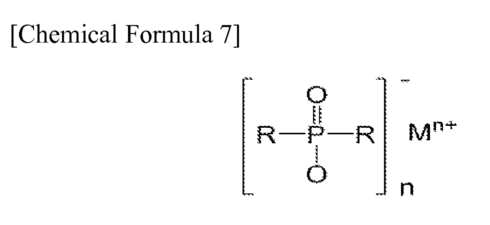 wherein R is C₁-C₆ alkyl group, C₄-C₆ cycloalkyl group, or C₆-C₁₀ aryl group; M is a metal of Al, Zn, Mg or Ca; and n is an integer of 2 or 3.

18. The flameproof thermoplastic resin composition of Claim 10, further comprising additives selected from the group consisting of plasticizers, heat stabilizers, antioxidants, anti-dripping agents, compatibilizers, light-stabilizers, pigments, dyes, inorganic fillers and mixtures thereof.

19. The flameproof thermoplastic resin composition of Claim 13, wherein a first average combustion time of the resin composition measured in accordance with the UL 94 VB for specimens having a thickness of 1/8" is less than about 38 seconds.
